# EUROPEAN PATENT APPLICATION

(11) **EP 1 968 074 A1**
(43) Date of publication of application: **10.09.2008**
(21) Application number: 06843199.8
(22) Date of filing: 25.12.2006
(51) Int. Cl.: G21C 17/032, G01F 1/00, G01F 1/66, G21D 1/00, G21D 1/02

(54) **ATOMIC REACTOR WATER SUPPLY PIPING STRUCTURE AND ULTRASONIC FLOWMETER SYSTEM**

(30) Priority: 27.12.2005 JP 2005376616
(71) Applicant: THE TOKYO ELECTRIC POWER COMPANY INCORPORATED, Tokyo 100-8560 (JP)
(72) Inventor: MORI, Michitsugu, Tokyo 1008560 (JP); TEZUKA, Kenichi, Tokyo 1008560 (JP); SUZUKI, Takeshi, Tokyo 1008560 (JP)
(74) Representative: HOFFMANN EITLE
(86) International application number: PCT/JP2006/325796
(87) International publication number: WO 2007/074780

(57) **Abstract**

A technology for accurately measuring with the use of an ultrasonic flowmeter the flow rate through a nuclear reactor water supply piping interposed between a nuclear reactor and a nuclear reactor water supply pump. In a reactor coolant cleaning system (30), piping to be joined with a reactor water supply system (10) is branched, thereby forming an auxiliary path (A) to be similarly joined with the reactor water supply system (10). The auxiliary path (A) is provided with a restriction part (C) having an inside diameter narrower than that of other parts of the auxiliary path (A) to complete a nuclear reactor water supply piping structure. Through this structure, cavitation bubbles are generated from the restriction part (C). An ultrasonic transducer (40) is disposed between the nuclear reactor (1) and the auxiliary path (A) in the piping for composing the reactor water supply system (10), thereby conducting measurement of the flow rate of fluid within the piping.

## Description

### Technical Field

The present invention relates to a nuclear reactor water supply piping structure for generating bubbles for measurement when an ultrasonic flowmeter is used under a condition where bubbles necessary for the measurement is insufficient, and an ultrasonic flowmeter system in the water supply piping structure.

### Background Art

As for a Doppler ultrasonic flowmeter capable of measuring a flow rate in non-contact, various technologies are disclosed. For instance, a technology described in Patent Document 1 is listed.

Patent Document 1: Japanese Patent Application Laid-open No. 2000-97742

The above technology will be explained more specifically. The Doppler ultrasonic flowmeter disclosed in the above-described document includes an ultrasonic transmitting means for launching an ultrasonic pulse of a required frequency from an ultrasonic transducer into a fluid to be measured in a fluid (for instance, water) pipe along a measurement line, a fluid velocity distribution measuring means for receiving an ultrasonic echo reflected from a measurement area among ultrasonic pulses incident into the fluid to be measured to measure the velocity distribution of the fluid to be measured in the measurement area, and a flow rate arithmetic computing means for computing a flow rate of the fluid to be measured in the measurement area based on the flow velocity of the fluid to be measured.
The ultrasonic waves incident into the fluid to be measured become reflecting waves using fine foreign matters or bubbles in the fluid as a reflector to force them to contribute to the above measurement.

In the ultrasonic flowmeter, when a fluid to be measured is liquid, a "clamp-on form" to fix the ultrasonic transmitting means on a pipe via a wedge is often used. Because there is an advantage of enabling to "retrofit" to piping.
In recent ultrasonic flowmeters, an emitting device (emission) of ultrasonic waves and a receiving device (receiver) to receive reflecting waves of the ultrasonic waves are often provided as an ultrasonic transmitting receiving device. An ultrasonic flowmeter provided in a form of an ultrasonic transmitting receiving device has a merit that only one time of an installing work on fluid piping is enough for completion.

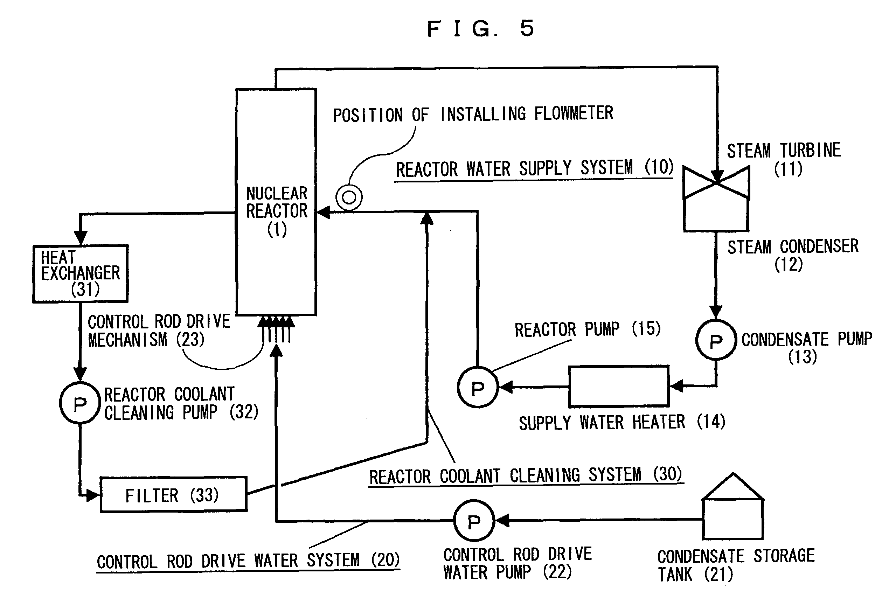

Use of an ultrasonic flowmeter with high measurement accuracy in piping of nuclear power plant facilities, especially in piping of a nuclear reactor water supply system has been studied. It will be explained based on FIG. 5.
Around a nuclear reactor 1, a nuclear reactor water supply system 10 is provided with a steam turbine 11, a steam condenser 12, a condensate pump 13, a supply water heater 14 and a nuclear reactor pump 15.

A control rod drive water system 20 includes a condensate storage tank 21, a control rod drive water pump 22 and a control rod drive mechanism 23.
A nuclear reactor coolant cleaning system 30 includes a heat exchanger 31, a reactor coolant cleaning pump 32 and a filter 33, and a downstream from the filter 33 is formed to be joined with piping between the reactor pump 15 in the reactor water supply system 10 and the nuclear reactor.
Here, flow rate measurement of fluid sent from the reactor pump 15 to the nuclear reactor 1 is required. (In a drawing, a position for the measurement is shown as "flowmeter installation position").

### Disclosure of the Invention

As described above, use of an ultrasonic flowmeter of high measurement accuracy in a nuclear reactor water supply piping has been studied. But there is problem as follows.
The ultrasonic flowmeter utilizes foreign matters and bubbles existing in a fluid as a reflector of ultrasonic waves. However, since a reactor water supply system 10 supplies clean water with high temperatures at high pressures, there are no foreign matters in the fluid and less possibility of generating bubbles. Accordingly, it might cause a difficulty of performing accurate measurement due to shortage of reflectors.

Therefore, a technology to add chemically stable helium as the bubbles is devised. Since helium gas is expensive, if the use of helium gas is inevitable, the amount of helium should be as small as possible. If the measurement requires no helium, it would be more economical.
Moreover, since helium is a non-condensed gas, it might give a bad influence to the steam turbine 11 if helium is used on a massive scale. Therefore, when helium is required to be used, it should be as small as possible.

A problem to be solved by the present invention is to provide a technology for accurate measurement of a flow rate in a reactor water supply piping between a nuclear reactor and a nuclear reactor water supply pump using an ultrasonic flowmeter.

### Means for Solving the Problems

(Claim 1)
The invention described in claim 1 relates to a nuclear reactor water supply piping structure.
That is, a nuclear reactor water supply piping structure includes an auxiliary path (A) to be similarly joined with a nuclear reactor water supply system (10) by branching piping to be joined with the reactor water supply system (10) in a nuclear reactor coolant cleaning system (30). In the auxiliary path (A), a restriction part (C) having an inside diameter narrower than that of other parts of the path is provided.

(Explanation of Term)
"The restriction part (C)" is formed by a venturi, a flow nozzle, an orifice or the like.

(Operation)
The reactor coolant cleaning system (30) joins the reactor water supply system (10), and the auxiliary path (A) branched from the piping to be joined also joins the reactor water supply system (10) so that fluid from the reactor coolant cleaning system (30) flows in. A static pressure of the fluid drops in the restriction part (C), and when the fluid passes through the restriction part (C) the fluid static pressure rapidly recovers to be high. At this time, bubbles (cavitation bubbles) are generated and crushed into fine bubbles.
Originally, the bubbles are generated only by vaporization of fluid flowing through in the reactor coolant cleaning system (30) and the reactor water supply system (10). Accordingly, there is no possibility to give a bad influence to the whole of the nuclear reactor. On the contrary, when conducting flow rate measurement of the reactor water supply system (10) using an ultrasonic flowmeter, the bubbles are effective as a reflector of ultrasonic waves and contribute to accurate measurement.

(Claim 2)
The invention in claim 2 relates to a nuclear reactor water supply piping structure.
That is, an auxiliary path (B) to be joined with a nuclear reactor water supply system (10) is formed in a control rod drive water system (20), and in the auxiliary path (B), a restriction part (C) having an inside diameter narrower than that of other parts of the path is provided.

(Operation)
The auxiliary path (B) to be joined with the reactor water supply system (10) is formed in the control rod drive water system (20) which is not originally joined with the reactor water supply system (10). Since the restriction part (C) exists in the auxiliary path (B), a static pressure of the fluid flowing through the auxiliary path (B) into the reactor water supply system (10) drops in the restriction part (C), and when the fluid passes through the restriction part (C), the fluid static pressure rapidly recovers to be high. At this time, bubbles (cavitation bubbles) are generated and crushed into fine bubbles. When conducting flow rate measurement of the reactor water supply system (10), the bubbles are effective as a reflector of ultrasonic waves and contribute to accurate measurement.

(Claim 3)
The invention in claim 3 gives limitation to the nuclear reactor water supply piping structure according to any one of claims 1 and 2.
That is, a bubble-generation gas supply pipe (D) for injecting bubble-generation gas is attached to the auxiliary paths (A and B) to make it possible to supply bubble-generation gas to the restriction part (B) by using the bubble-generation gas supply pipe (D).

(Explanation of Term)
"Bubble-generation gas" is, for instance, helium. As other preferable gases, inert gas which is chemically stable and less influential to the reactivity of a nuclear reactor core is suitable.
Since the bubble-generation gas is used as a supplement when cavitation gas is insufficient, there is no possibility to inhale the gas in large quantities, and influence to respective members in the nuclear reactor can be kept reduced.

(Claim 4)
The invention in claim 4 relates to an ultrasonic flowmeter system, which includes a restriction part in a reactor water supply and condensation system and an ultrasonic transducer on a downstream side of the restriction part, so that the flow rate of fluid in the reactor water supply and condensation system is measured.

A "reactor water supply and condensation system" means a water supply system and/or a condensation system of a nuclear reactor. A "restriction part" is formed with a venturi, a flow nozzle, an orifice or the like.

Bubbles are generated from the restriction part by a cavitation phenomenon. The bubbles are utilized as a reflector of ultrasonic waves and help an ultrasonic flowmeter operate so as to measure the flow rate of fluid. Since the bubbles are generated only by vaporization of fluid flowing through in the nuclear reactor water supply and condensation system, there is no possibility to give a bad influence to the whole of the nuclear reactor, and moreover, in the flow rate measurement using the ultrasonic flowmeter, the bubbles contribute to accurate measurement.

(Claim 5)
The invention described in claim 5 relates to an ultrasonic flowmeter system for conducting flow rate measurement in the nuclear reactor water supply system by installing an ultrasonic flowmeter in the nuclear reactor water supply piping structure relating to claim 1.
That is, a nuclear reactor water supply piping structure comprises an auxiliary path (A) to be similarly joined with a nuclear reactor water supply system (10) formed by branching piping to be joined with the nuclear reactor water supply system (10) in a reactor coolant cleaning system (30), and a restriction part (C) having an inside diameter narrower than that of other parts of the auxiliary path (A) formed in the auxiliary path (A). An ultrasonic transducer (40) is disposed between the auxiliary path (A) in the piping composing the reactor water supply system (10) and the nuclear reactor (1) so that the flow rate of fluid within the piping can be measured.

(Explanation of Term)
The above-described "ultrasonic flowmeter" includes an ordinary Doppler ultrasonic flowmeter and an ultrasonic flow meter using a correlation method. The ultrasonic flowmeter using the correlation method is, for instance, an ultrasonic flowmeter disclosed in Japanese Patent Application Laid-open No. 2003-344131.
Both flowmeters include: an ultrasonic transmitting means for launching an ultrasonic pulse of required frequency into fluid to be measured in a fluid piping from an ultrasonic transducer along a measurement line; a fluid velocity distribution measuring means which receives an ultrasonic echo reflected from a measurement area among the ultrasonic pulses incident into fluid to be measured, and measures the velocity distribution of the fluid to be measured in the measurement area; and a flow rate arithmetic computing means for computing the flow rate of fluid to be measured in the measurement area based on the flow velocity distribution of the fluid to be measured; and measure the flow rate of the fluid to be measured.

(Claim 6)
The invention described in claim 6 relates to an ultrasonic flowmeter system for conducting flow rate measurement in the nuclear reactor water supply system by installing an ultrasonic flowmeter in the nuclear reactor water supply piping structure relating to claim 2.
That is, a nuclear reactor water supply piping structure comprises an auxiliary path (B) to be joined with a nuclear reactor water supply system (10) in a control rod drive water system (20), and a restriction part (C) having an inside diameter narrower than that of other parts of the auxiliary path (B) formed in the auxiliary path (B). An ultrasonic transducer (40) is disposed between the auxiliary path (A) in the piping composing the reactor water supply system (10) and the nuclear reactor (1) so that the flow rate of fluid within the piping can be measured.

(Claim 7)
The invention described in claim 7 gives limitation to the ultrasonic flowmeter system according to any one of claims 5 and 6.
That is, a bubble-generation gas supply pipe (D) for injecting bubble-generation gas is annexed to the auxiliary paths (A and B) so that the bubble-generation gas can be supplied to the restriction part (B) through the bubble-generation gas supply pipe (D).

(Variation)
It is possible to control the execution of bubble-generation gas supply through the bubble-generation gas supply pipe (D) when judging that an accurate value for the flow rate of fluid measured by the ultrasonic flowmeter has not been obtained yet.
Note that it is possible to realize complete automatic processing by establishing the "accurate value" using alienation from values accumulated by repeated measurements.

### Effect of the Invention

According to the inventions described in claim 1 to claim 3, it becomes possible to provide a nuclear reactor water supply piping structure through which cavitation bubbles effective as a reflector of an ultrasonic flowmeter can be generated for the purpose of accurately measuring the flow rate in the reactor water supply piping between the nuclear reactor and the reactor water supply pump.
According to the inventions described in claims 5 to 7, it becomes possible to provide a nuclear reactor water supply piping structure necessary for accurate measurement of the flow rate in the reactor water supply piping between the nuclear reactor and the reactor water supply pump using an ultrasonic flowmeter can be provided, and, in addition to that, it becomes possible to provide an ultrasonic flowmeter system realizing accurate measurement of the flow rate according to the nuclear reactor water supply piping structure.

### Brief Description of Drawings

FIG. 1 is a piping system diagram around a nuclear reactor relating to a first embodiment;
FIG. 2 is a conceptual diagram of a main part in the piping system diagram relating to the first embodiment;
FIG. 3 is a conceptual diagram showing variation of the main part in the piping system diagram around the nuclear reactor;
FIG. 4 is a piping system diagram around a nuclear reactor relating to a second embodiment; and
FIG. 5 is a piping system diagram around a reactor, which relates to a conventional technology.

### Explanation of Symbols and Numerals

- 1: NUCLEAR REACTOR
- 10: NUCLEAR REACTOR WATER SUPPLY SYSTEM
- 11: STEAM TURBINE
- 12: STEAM CONDENSER
- 13: CONDENSATE PUMP
- 14: SUPPLY WATER HEATER
- 15: REACTOR PUMP
- 20: CONTROL ROD DRIVE WATER SYSTEM
- 21: CONDENSATE STORAGE TANK
- 22: CONTROL ROD DRIVE WATER PUMP
- 23: CONTROL ROD DRIVE MECHANISM
- 30: REACTOR COOLANT CLEANING SYSTEM
- 31: HEAT EXCHANGER
- 32: REACTOR COOLANT CLEANING PUMP
- 33: FILTER
- 40: ULTRASONIC TRANSDUCER
- 41: WEDGE
- A: AUXILIARY PATH
- B: AUXILIARY PATH
- C: RESTRICTION PART

### Best Mode for Carrying out the Invention

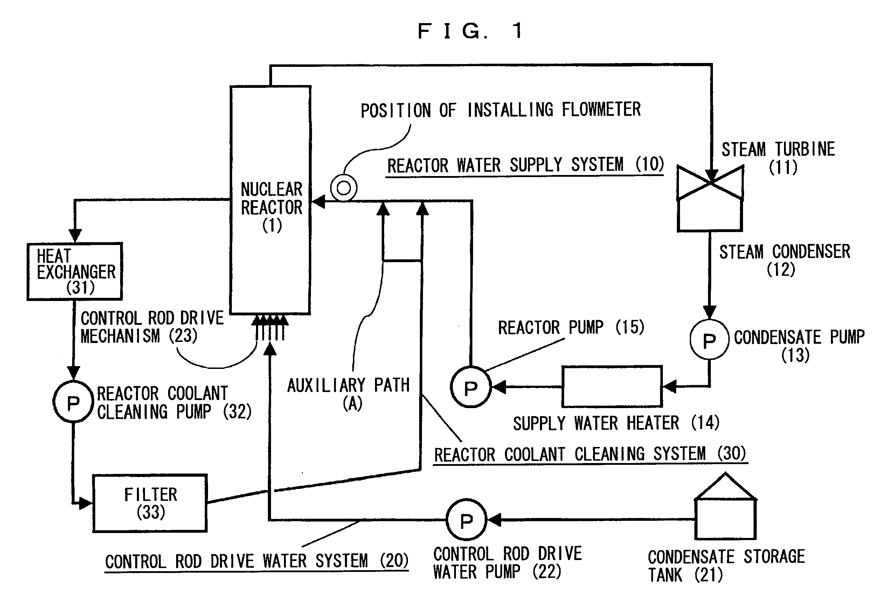

Hereinafter, the present invention will be further explained in more detail based on embodiments and drawings. The drawings used here are FIG. 1 through FIG. 4.

(FIG. 1)
FIG. 1 is a piping system diagram around a boiling water reactor relating to a first embodiment. Around a reactor 1, a reactor water supply system 10 is provided with a steam turbine 11, a steam condenser 12, a condensate pump 13, a supply water heater 14 and a reactor pump 15. Here, measurement of the flow rate of fluid sent from the reactor pump 15 to the nuclear reactor 1 is required. In FIG. 1, the position for the measurement is shown as "position of installing the flowmeter".
A control rod drive water system 20 includes a condensate storage tank 21, a control rod drive water pump 22 and a control rod drive mechanism 23.

A reactor coolant cleaning system 30 includes a heat exchanger 31, a reactor coolant cleaning pump 32 and a filter 33, and a downstream of the filter 33 is formed to be joined with piping between the reactor pump 15 in the reactor water supply system 10 and the nuclear reactor. The piping to be joined together is branched and forms an auxiliary path A similarly to be joined with the reactor supply water system 10.

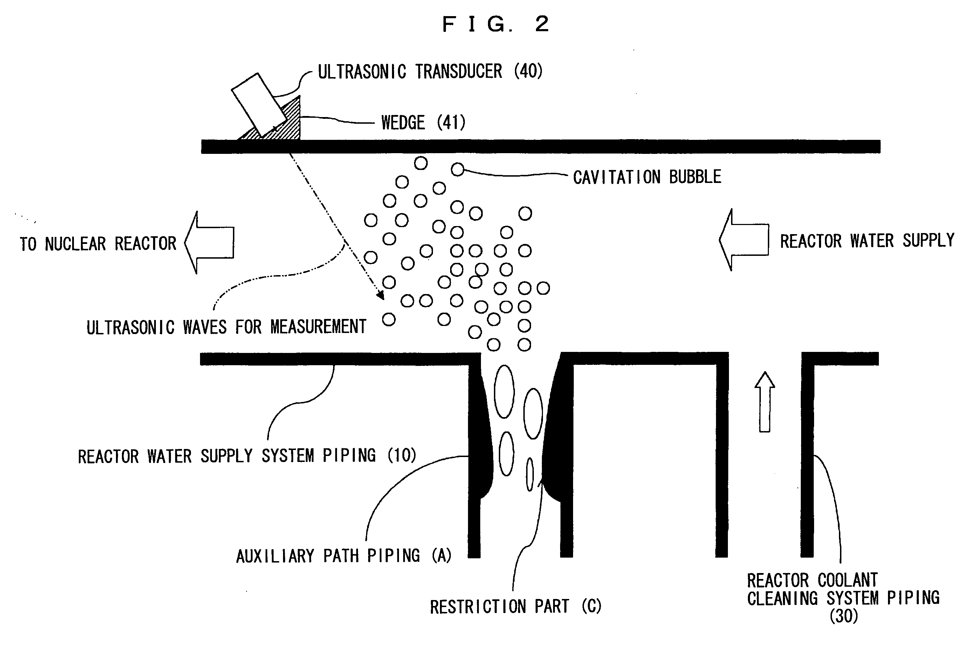

(FIG. 2)
Further explanation will be made here in detail using FIG. 2.
In the auxiliary path A, a restriction part C having an inside diameter narrower than that of other parts of the path is provided. A fluid static pressure drops in the restriction part C, and recovers rapidly to a high pressure when the fluid passes through the restriction part C. At that time, bubbles (cavitation bubbles) are generated and crushed into fine bubbles.
Since the bubbles are generated only by vaporization of fluid flowing in the reactor coolant cleaning system 30 and the reactor water supply system 10, there is no possibility to give a bad influence to the whole of the nuclear reactor.

On the position shown as "position of installing the flowmeter" in FIG. 1, an ultrasonic transducer 40 of an ultrasonic flowmeter is fixed via a wedge 41 as illustrated in FIG. 2. The ultrasonic transducer 40 transmits ultrasonic waves for measurement to fluid to be measured in the piping of the reactor water supply system 10, and serves as a receiver receiving ultrasonic echoes reflected from a reflector such as the cavitation bubbles in a measurement area.

The ultrasonic transducer 40 serves as an ultrasonic transmitting means for transmitting an ultrasonic pulse having a required frequency (fundamental frequency) along a measurement line to the fluid to be measured, and a fluid velocity distribution measuring means for receiving an ultrasonic echo reflected from the measurement area of the ultrasonic pulse incident into the fluid to be measured to measure the fluid velocity distribution of the fluid to be measured in the measurement area. Then, though not shown, it is connected to a computer such as a microcomputer, a CPU, an MPU, or the like as a flow rate computing means for determining the flow rate of the fluid to be measured time-dependently based on the velocity distribution and to a display device capable of displaying an output from the computer on the time series.

An ultrasonic echo in a longitudinal wave received by the ultrasonic transducer 40 is received with a reflected wave receiver, and is converted into an echo electric signal by the reflected wave receiver. The echo electric signal is digitalized through an AD converter after amplified by an amplifier. Then, the digitalized digital echo signal is inputted into a fluid velocity calculation device provided with a fluid velocity distribution measurement circuit.

(FIG. 3)

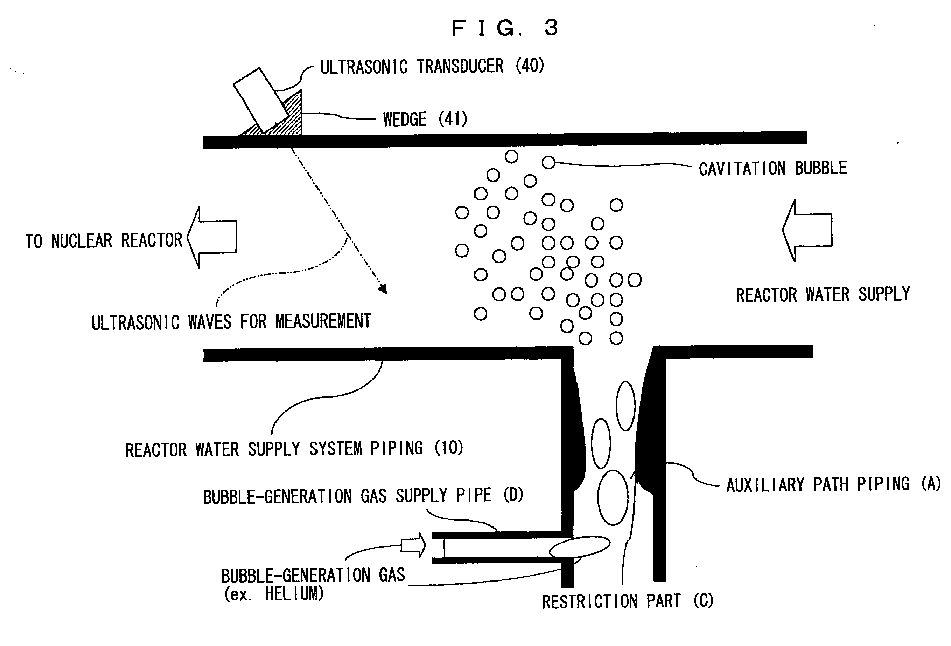

FIG. 3 shows a variation of the auxiliary path piping A provided with a bubble-generation gas supply pipe D. In other words, the bubble-generation gas supply pipe D for injecting bubble-generation gas is annexed, so that bubble-generation gas is able to be supplied to the restriction part B by using the bubble-generation gas supply pipe D.
Helium is used as bubble-generation gas. Since the bubble-generation gas is used as a supplement when cavitation gas is insufficient, there is no possibility to inhale the gas in large quantities.

(FIG. 4)

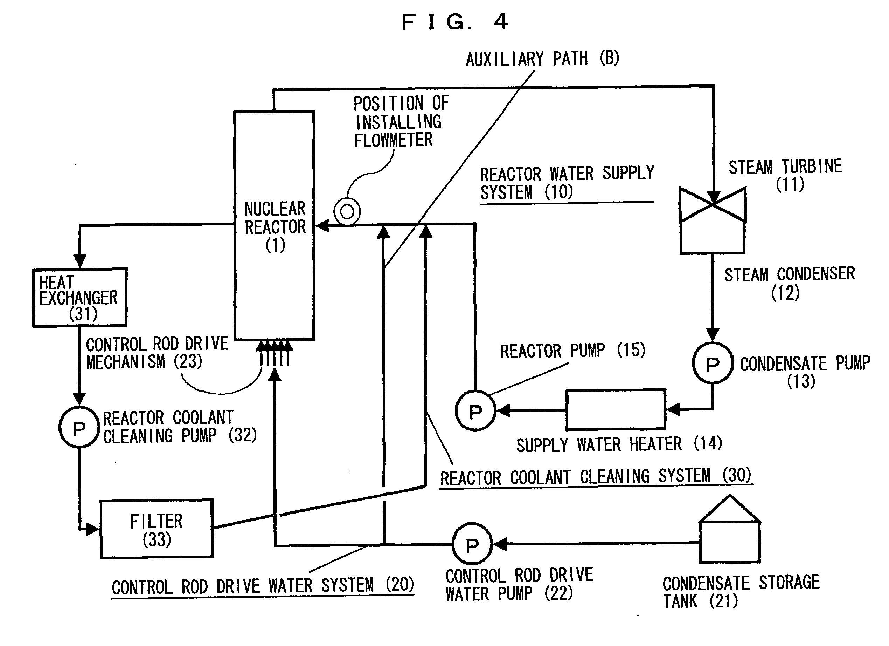

FIG. 4 corresponds to a second embodiment showing a variation of the auxiliary path.
In other words, an auxiliary path B to be joined with the reactor water supply system 10 is formed in the control rod drive water system 20. In the auxiliary path B, a restriction part (C) having an inside diameter narrower than that of other parts of the path is provided, similarly to the first embodiment.

On which of the two embodiments, the embodiment shown in FIG. 1 and that shown in FIG. 4, should be selected, it is possible to determine it according to conditions on-site such as ease of installing more piping (A or B) or the like. In other words, it becomes possible to perform flow rate measurement without extensive remodeling of a current reactor by adopting an ultrasonic flowmeter having an established reputation for flow rate measurement accuracy.

### Industrial Availability

The present invention can be used in nuclear power generation facilities.
It can also be used in an installation field of ultrasonic flowmeters as well as a maintenance business for nuclear power generation facilities, or manufacturers of ultrasonic flowmeters.

## Claims

1. A nuclear reactor water supply piping structure, comprising:
an auxiliary path to be joined with a nuclear reactor water supply system formed by branching piping to be joined with the nuclear reactor water supply system in a nuclear reactor coolant cleaning system, and
a restriction part having an inside diameter narrower than that of other parts of the path provided in said auxiliary path.

2. A nuclear reactor water supply piping structure, comprising:
an auxiliary path to be joined with a nuclear reactor water supply system in a control rod drive water system; and
a restriction part having an inside diameter narrower than that of other parts of the path provided in said auxiliary path.

3. The nuclear reactor water supply piping structure according to any one of claims 1 and 2, further comprising:
a bubble-generation gas supply pipe for injecting bubble-generation gas attached to said auxiliary path to make it possible to supply bubble-generation gas to said restriction part by using the bubble-generation gas supply pipe.

4. An ultrasonic flowmeter system, comprising:
a restriction part in a nuclear reactor water supply and condensation system; and
an ultrasonic transducer on a downstream side of said restriction part,
wherein a flow rate of fluid in the nuclear reactor water supply and condensation system is measured.

5. An ultrasonic flowmeter system, comprising:
an ultrasonic transducer disposed between an auxiliary path in piping for composing a nuclear reactor water supply system and a nuclear reactor to measure a flow rate of fluid within the piping,
in a nuclear reactor water supply piping structure that comprises:
an auxiliary path to be similarly joined with a nuclear reactor water supply system formed by branching piping to be joined with the nuclear reactor water supply system in a reactor coolant cleaning system, and
a restriction part having an inside diameter narrower than that of other parts of the path provided in said auxiliary path.

6. An ultrasonic flowmeter system, comprising:
an ultrasonic transducer disposed between an auxiliary path in piping for composing a nuclear reactor water supply system and a nuclear reactor to measure a flow rate of fluid within the piping,
in a nuclear reactor water supply piping structure that comprises:
an auxiliary path to be joined with a nuclear reactor water supply system in a control rod drive water system; and
a restriction part having an inside diameter narrower than that of other parts of the path provided in said auxiliary path.

7. The ultrasonic flowmeter system according to any one of claims 5 and 6, further comprising:
a bubble-generation gas supply pipe attached to said auxiliary path for injecting bubble-generation gas,
wherein the bubble-generation gas supply pipe supplies bubble-generation gas to said restriction part.
